# EUROPEAN PATENT APPLICATION

(11) **EP 4 152 695 A1**
(43) Date of publication of application: **22.03.2023**
(21) Application number: 21821646.3
(22) Date of filing: 16.04.2021
(51) Int. Cl.: H04L 12/24

(54) **INFORMATION NOTIFICATION METHOD, COMMUNICATION NODE, AND COMPUTER-READABLE MEDIUM**

(30) Priority: 12.06.2020 CN 202010537503
(71) Applicant: ZTE Corporation, Shenzhen, Guangdong 518057 (CN)
(72) Inventor: XIONG, Quan, Shenzhen, Guangdong 518057 (CN); ZHANG, Zheng, Shenzhen, Guangdong 518057 (CN)
(74) Representative: Canzler & Bergmeier Patentanwälte Partnerschaft mbB
(86) International application number: PCT/CN2021/087648
(87) International publication number: WO 2021/249021

(57) **Abstract**

An embodiment of the present disclosure provides an information notification method applied to a first communication node. The information notification method comprises: receiving a configuration message of a deterministic flow sent by a second communication node, the configuration message carrying a mapping rule for mapping the deterministic flow to a network slice; and mapping a target deterministic flow to a target network slice according to the mapping rule, and transmitting a message of the target deterministic flow through the target network slice. The embodiment of the present disclosure also provides an information notification method applied to the second communication node, a first communication node, a second communication node and a computer-readable medium.

## Description

### CROSS-REFERENCE TO RELATED APPLICATIONS

The present application claims priority to Chinese Patent Application No. 202010537503.8 filed on June 12, 2020, the entire contents of which are incorporated herein by reference.

### TECHNICAL FIELD

The present disclosure relates to the field of communication technologies, and in particular, to an information notification method, a communication node, and a computer-readable medium.

### BACKGROUND

To meet service expectations of deterministic services and the like of bearer networks, IEEE 802.1 standard organization defines Time-Sensitive Networking (TSN) to provide services with low latency, low packet loss rate and high reliability for services in L2 layer. Meanwhile, to implement a deterministic technology in L3 layer, IETF standard organization provides deterministic networking (DetNet), RFC8655 defines a technical architecture related to the DetNet to provide deterministic services for a bridge network in L2 layer and a routing network in L3 layer, expectations for quality of service (QoS) include a maximum deterministic latency, low packet loss rate, low jitter, high reliability, and the like.

### SUMMARY

In a first aspect, the present disclosure provides an information notification method, applied to a first communication node, including: receiving a configuration message of a deterministic flow sent by a second communication node, the configuration message carrying a mapping rule from the deterministic flow to a network slice; and mapping a target deterministic flow to a target network slice according to the mapping rule, and transmitting a packet of the target deterministic flow through the target network slice.

In a second aspect, the present disclosure provides an information notification method, applied to a second communication node, including: generating a configuration message according to a deterministic requirement of a target deterministic flow, the configuration message carrying a mapping rule from a deterministic flow to a network slice; and sending the configuration message to a first communication node, so that the first communication node maps the target deterministic flow to a target network slice according to the mapping rule.

In a third aspect, the present disclosure provides a first communication node, including: at least one processor; a memory having at least one program stored thereon, the at least one program, when executed by the at least one processor, causes the at least one processor to perform the information notification method described in the first aspect; and at least one I/O interface, connected between the processor and the memory, and configured to implement information interaction between the processor and the memory.

In a fourth aspect, the present disclosure provides a second communication node, including: at least one processor; a memory having at least one program stored thereon, the at least one program, when executed by the at least one processor, causes the at least one processor to perform the information notification method described in the second aspect; and at least one I/O interface, connected between the processor and the memory, and configured to implement information interaction between the processor and the memory.

In a fifth aspect, the present disclosure provides a computer-readable medium having a computer program stored therein, the computer program, when executed by a processor, performs the information notification method described in the first aspect, or the information notification method described in the second aspect.

### BRIEF DESCRIPTION OF DRAWINGS

Fig. 1 is a flowchart of an information notification method according to the present disclosure;
Fig. 2 is a schematic diagram of a format of a slice-action component according to the present disclosure;
Fig. 3 is a flowchart of an information notification method according to the present disclosure;
Fig. 4 is a flowchart of an information notification method according to the present disclosure;
Fig. 5 is a flowchart of an information notification method according to the present disclosure;
Fig. 6 is a flowchart of an information notification method according to the present disclosure;
Fig. 7 is a schematic diagram of a network structure of TSN or DetNet based on a network slice according to the present disclosure;
Fig. 8 is a block diagram of a first communication node according to the present disclosure;
Fig. 9 is a block diagram of a second communication node according to the present disclosure; and
Fig. 10 is a block diagram of a computer-readable medium according to the present disclosure.

### DETAIL DESCRIPTION OF EMBODIMENTS

In order to make those skilled in the art better understand technical solutions of the present disclosure, an information notification method, a first communication node, a second communication node and a computer-readable medium according to the present disclosure are further described in detail below with reference to the accompanying drawings.

Exemplary embodiments are described in detail below with reference to the accompanying drawings, but may be embodied in different forms, and should not be construed as a limitation. The embodiments are illustrated merely for those skilled in the art fully understanding the scope of the present disclosure.

The embodiments of the present disclosure and the technical features in the embodiments may be combined with each other if no conflict is incurred.

As used herein, a term "and/or" includes any and all combinations of one or more of listed items.

The terms used in the present disclosure are for a purpose of describing particular embodiments only, and are not intended to limit the present disclosure. As used in the present disclosure, singular forms "a" and "the" are intended to include plural forms as well, i.e., to represent at least one, unless the context clearly defines otherwise. It should further be understood that terms "includes" and/or "made of" in the present disclosure are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are same as meanings commonly understood by one of ordinary skill in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

A network slice refers to a logical network with particular network characteristics, and is composed of network function modules and resources configured for the network function modules. In an application of a bearer network, network slicing is to slice and virtualize network topology resources such as network links, nodes and ports of the bearer network to create a virtual network.

Through researches, it is found that, in existing TSN and DetNet, resources are reserved for deterministic services to eliminate congestion, packet loss and the like, so as to meet service expectations of the deterministic services, such as low latency, low packet loss rate, high reliability and the like, of a bearer network. However, in an existing bearer network, services are directly deployed on a physical network and resources are reserved for the deterministic services, in such architecture, various services in a service layer share resources of the physical network, and there is no isolation mechanism between the services, resulting in a problem of resource competition. Therefore, mutual interference between the deterministic services is caused, and goals of eliminating congestion and packet loss cannot be achieved, and service expectations of the deterministic services such as low latency, low jitter and low packet loss rate cannot be met.

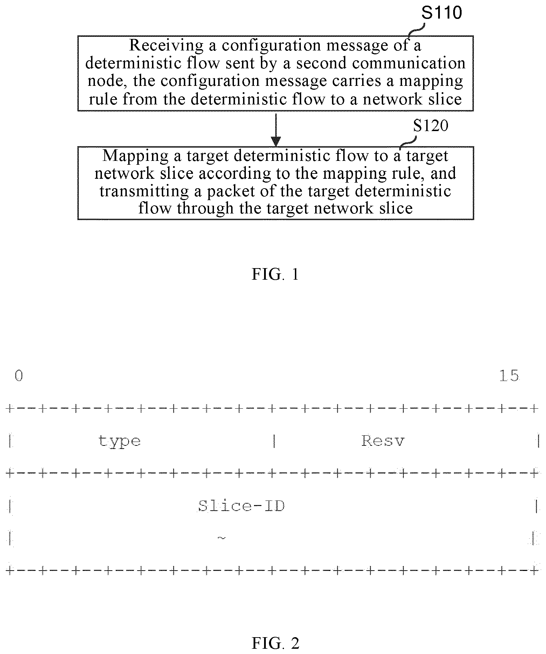

In a first aspect, referring to Fig. 1, the present disclosure provides an information notification method, applied to a first communication node, including operations S 110 and S120.

At operation S 110, receiving a configuration message of a deterministic flow sent by a second communication node, the configuration message carrying a mapping rule from the deterministic flow to a network slice.

At operation S120, mapping a target deterministic flow to a target network slice according to the mapping rule, and transmitting a packet of the target deterministic flow through the target network slice.

In the present disclosure, based on network slicing, deterministic services are transmitted by a network slice, for example, at a TSN terminal node in L2 layer or DetNet in L3 layer, deterministic services are transmitted by the network slice, the deterministic services and non-deterministic services on a bearer network are isolated, and different deterministic services are logically isolated, resources are reserved for the deterministic services and are allocated for different deterministic services, so as to eliminate mutual interference between the deterministic services.

In the present disclosure, the second communication node creates a plurality of network slices on a physical network. When the network slice is created, strategies and characteristics associated with different network slices are respectively appointed according to service expectations of different deterministic services, so as to meet service expectations of any designated deterministic service. For example, an enhanced mobile broadband (eMBB) service, such as 4K/8K mobile video, and the like, expects ultra-wide bandwidth and ultra-high speed mobility, and during creating a network slice bearing the eMBB service, strategies and characteristics associated with the eMBB service, such as ultra-wide bandwidth and ultra-high speed mobility, are appointed; an ultra-reliable and low latency communication (uRLLC) service, such as an application of industrial automation, an application of automatic driving, an application of smart grid, an application of remote control, and the like, expects ultra-low latency (e.g., less than 1ms) and high reliability, and during creating a network slice bearing the uRLLC service, strategies and characteristics associated with the uRLLC service, such as ultra-low latency and high reliability, are appointed; a massive machine type communication (mMTC) service, such as an application of machine to machine (M2M), an application of Internet of things (IOT), and the like, expects an ultra-large number of connections, and during creating a network slice bearing the mMTC service, strategies and characteristics associated with the mMTC service, such as an ultra-large number of connections and the like, are appointed.

In the present disclosure, a manner configuring a control plane is adopted for notification and interaction of information related to a mapping from a deterministic flow to a network slice between the second communication node and the first communication node, so as to control the deterministic flow, for example, map the deterministic flow to the network slice, and the like. At the operation S110, the first communication node receives a configuration message send by the second communication node, the configuration message has a preset format and carries a mapping rule from a deterministic flow to a network slice. In the present disclosure, the first communication node converts the configuration message received into a flow control policy of a forwarding plane, so that, at the operation S120, a received target deterministic flow is mapped to a target network slice, and a packet of the target deterministic flow is transmitted through the target network slice.

It should be noted that the target network slice is a network slice meeting a service level agreement (SLA) guarantee of the target deterministic flow. The mapping rule is information for identifying a target network slice with a corresponding SLA guarantee by the first communication node at a control plane, mapping a target deterministic flow to the target network slice with the corresponding SLA guarantee at a forwarding plane, and transmitting a packet of the target deterministic flow through the target network slice.

In the present disclosure, the deterministic flow may be a TSN flow of L2 layer, or a DetNet flow of L3 layer, which is not limited in the present disclosure.

In the information notification method provided in the present disclosure, a network slice providing a SLA guarantee meeting a deterministic service is created according to service expectations of the deterministic service, a manner configuring a control plane is adopted for notification and interaction of information related to a mapping from a deterministic flow to the network slice between the first communication node and the second communication node, so that the deterministic flow is mapped to the network slice with the SLA guarantee, and the packet of the deterministic flow is transmitted through the network slice, thereby resources can be reserved and allocated for the deterministic services, mutual interference between the deterministic services can be avoided, congestion and packet loss and the like can be eliminated, and service expectations of the deterministic services can be met.

In some implementations, the first communication node is an ingress edge node of a network slice.

In some implementations, in the first communication node, the deterministic flow is mapped to a corresponding network slice according to a network slice identifier.

Accordingly, in some implementations, the mapping rule includes a network slice identifier of the target network slice, and the network slice identifier is configured to uniquely identify the target network slice.

Since the network slice identifier is configured to uniquely identify one network slice, the mapping rule includes the network slice identifier of the target slice network, so that the first communication node can uniquely identify the target network slice according to the network slice identifier serving as the mapping rule, map the target deterministic flow to the target network slice with a corresponding SLA guarantee, and transmit the packet of the target deterministic flow through the target network slice.

For example, in the present disclosure, distributed control plane technologies used for supporting slicing mainly include a flexible algorithm (FA), a virtual private network (VPN+), and a network slice of transport network (Slice+). The network slice identifier (ID) includes an administrative instance identifier (AII) configured to distinguish and identify different virtual network resources; an FA identifier (FA-ID) configured to identify an FA path corresponding to a series of constraint conditions including calculation-type, metric-type and other constraint conditions; and a virtual transport network (VTN) identifier (VTN-ID) configured to identify a VTN; in addition, the network slice ID further includes a multi-topology ID configured to identify a sub-topology. Any network slice ID described above may be configured to uniquely identify one network slice.

Accordingly, in some implementations, the network slice ID includes an All, an FA-ID, a VTN-ID, and a multi-topology ID.

In the present disclosure, slicing in a forwarding plane of a bearer network may include soft slicing and hard slicing. The soft slicing is based on statistic multiplexing in Layer 2 or above, for example, includes a tunnel/pseudo wire technology based on segment routing (SR), internet protocol (IP)/multi-protocol label switching (MPLS), and a virtual technology based on VPN, virtual local area network (VLAN) and the like. The hard slicing is based on a physical rigid pipe in Layer 1 or an optical layer, for example, includes a flexible Ethernet (FlexE) technology, a slicing channel (SC) technology, an optical transport network (OTN) technology, a wavelength division multiplexing (WDM) technology, and the like.

Accordingly, in some implementations, the target network slice includes a soft slice created by slicing based on a flexible pipe, a hard slice created by slicing based on a physical rigid pipe; the slicing based on the flexible pipe includes a tunnel/pseudo wire technology based on SR and IP/MPLS, a virtual technology based on VPN and VLAN; and the slicing based on the physical rigid pipe includes a FlexE technology, a SC technology, an OTN technology, and a WDM technology.

As described above, in the present disclosure, a manner configuring a control plane is adopted for notification and interaction of information related to a mapping from a deterministic flow to a network slice. In some implementations, notification and interaction of information related to a mapping from a deterministic flow to a network slice between the first communication node and the second communication node are implemented through a border gateway protocol (BGP) message.

Accordingly, in some implementations, the configuration message includes a BGP message.

In some implementations, notification and interaction of information related to a mapping from a deterministic flow to a network slice between the second communication node and the first communication node are implemented through an update message (i.e., UPDATE message) in the BGP message. The update message is configured to transmit routing information between BGP peers, and information carried in the update message may be used to create topologies describing relationships between various autonomous systems, so as to notify feasible routes with attributes of shared common paths to peers, or to withdraw infeasible routes from a service. Network layer reachability information (NLRI) is carried in the update message, and is configured to indicate information of a route target. In a function of a BGP flow specification (Flowspec), NLRI and an extended community attribute may carry matching conditions of flows and operations to be executed after the flows are matched, and are configured to distribute rules for filtering and forwarding the flows.

A flow specification in the NLRI is an n-tuple including a plurality of matching conditions applied to an IP flow. Each Flowspec NLRI may include a plurality of components, such as target prefixes, source prefixes, protocols, ports, or the like. In a case where a designated packet matches an intersection (AND) of all components in the Flowspec, the packet is regarded to be matched with the Flowspec.

In the present disclosure, a slice-action component is defined based on the BGP Flowspec, and the slice-action component carries a mapping rule from a deterministic flows to a network slice.

Accordingly, in some implementations, the configuration message is an update message in the BGP message, the update message carries NLRI, and the NLRI includes slice-action component configured with the mapping rule.

Fig. 2 is a schematic diagram of a format of a slice-action component according to the present disclosure.

As shown in Fig. 2, the slice-action component according to the present disclosure includes a slice type field (Type) configured with a type of the target network slice; and a slice identifier field (Slice-ID) configured with a network slice identifier of the target network slice.

In the present disclosure, distributed control plane technologies used for supporting slicing include an FA, a VPN+, and a Slice+. Correspondingly, an AII, an FA-ID, a VTN-ID, and a Multi-Topology ID each may uniquely identify one network slice.

In some implementations, as shown in Fig. 2, a length of the Type field is eight bits. A length of the Slice-ID field is variable, for example, if the network slice identifier is a Multi-Topology ID, the length of the Slice-ID field is sixteen bits; if the network slice identifier is an FA-ID, the length of the Slice-ID field is eight bits; if the network slice identifier is an AII, the length of the Slice-ID field is thirty-two bits; if the network slice identifier is a VTN-ID, the length of the Slice-ID field is thirty-two bits.

In the present disclosure, according to the network slice identifier configured in the Slice-ID field of the slice-action component, the deterministic flow is mapped to the target network slice.

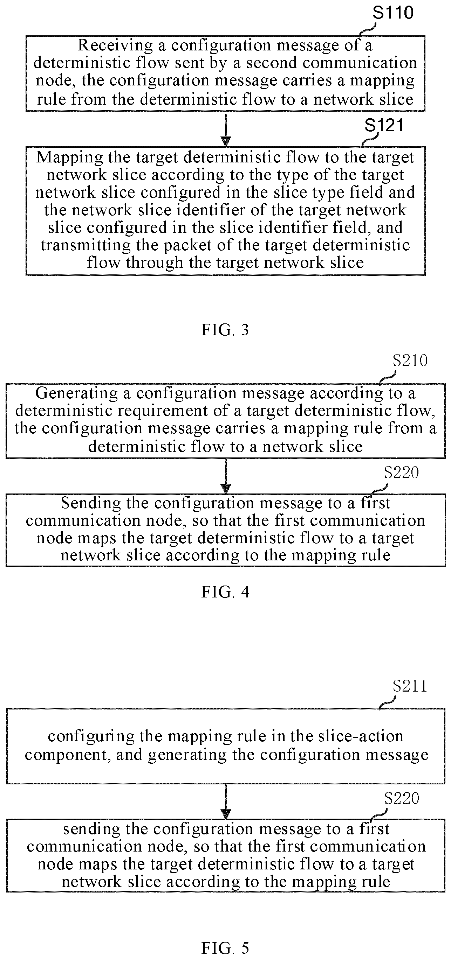

Accordingly, referring to Fig. 3, in some implementations, the operation S120 includes operations S121.

At operation S121, mapping the target deterministic flow to the target network slice according to the type of the target network slice configured in the slice type field and the network slice identifier of the target network slice configured in the slice identifier field, and transmitting the packet of the target deterministic flow through the target network slice.

In some implementations, notification and interaction of information related to a mapping from a deterministic flow to a network slice between the second communication node and the first communication node are implemented through a path computation element protocol (PCEP) message.

Accordingly, in some implementations, the configuration message includes a PCEP message.

In some implementations, the packet of the target deterministic flow includes a TSN packet, a DetNet packet.

In a second aspect, referring to Fig. 4, the present disclosure provides an information notification method, applied to a second communication node, including operations S210 and S220.

At operation S210, generating a configuration message according to a deterministic requirement of a target deterministic flow, the configuration message carrying a mapping rule from a deterministic flow to a network slice.

At operation S220, sending the configuration message to a first communication node, so that the first communication node maps the target deterministic flow to a target network slice according to the mapping rule.

In the present disclosure, the second communication node creates a plurality of network slices on a physical network. During creating the network slices, strategies and characteristics associated with different network slices are respectively appointed according to service expectations of different deterministic services, so as to meet service expectations of the deterministic services. For example, an enhanced mobile broadband (eMBB) service, such as 4K/8K mobile video, and the like, expects ultra-wide bandwidth and ultra-high speed mobility, and during creating a network slice bearing the eMBB service, strategies and characteristics associated with the eMBB service such as ultra-wide bandwidth and ultra-high speed mobility are appointed; an ultra-reliable and low latency communications (uRLLC) service, such as an application of industrial automation, an application of automatic driving, an application of smart grid, an application of remote control, and the like, expects ultra-low latency (e.g., less than 1ms) and high reliability, and during creating a network slice bearing the uRLLC service, strategies and characteristics associated with the uRLLC service such as ultra-low latency and high reliability are appointed; a massive machine type communication (mMTC) service, such as an application of machine to machine (M2M), an application of Internet of things (IOT), and the like, expects an ultra-large number of connections, and during creating a network slice bearing the mMTC service, strategies and characteristics associated with the mMTC service such as an ultra-large number of connections and the like are appointed.

In the present disclosure, a manner configuring a control plane is adopted for notification and interaction of information related to a mapping from a deterministic flow to a network slice between the second communication node and the first communication node, so as to control the deterministic flow, for example, map the deterministic flow to the network slice, and the like. At operation S210, the second communication node generates a configuration message according to a preset format, the configuration message carries a mapping rule from a deterministic flow to a network slice, and at operation S220, the second communication node sends the configuration message to the first communication node, so that the first communication node can map a target deterministic flow to a target network slice according to the mapping rule carried in the configuration message. It should be noted that the target network slice is a network slice meeting a SLA guarantee of the target deterministic flow.

In the present disclosure, the deterministic flow may be a TSN flow of L2 layer, or a DetNet flow of L3 layer, which is not limited in the present disclosure.

In the information notification method provided in the present disclosure, a network slice providing a SLA guarantee meeting a deterministic service is created according to service expectations of the deterministic service, a manner configuring a control plane is adopted for notification and interaction of information related to a mapping from a deterministic flow to a network slice between the second communication node and the first communication node, and the packet of the deterministic flow is mapped to the network slice with the SLA guarantee to be transmitted, so that resources can be reserved and allocated for the deterministic services, mutual interference between the deterministic services can be avoided, congestion and packet loss can be eliminated, and the service expectations of the deterministic services can be met.

In some implementations, the second communication node is a slicing controller.

In some implementations, in the first communication node, the deterministic flow is mapped to a corresponding network slice according to a network slice identifier.

Accordingly, in some implementations, the mapping rule includes a network slice identifier of the target network slice, and the network slice identifier is configured to uniquely identify the target network slice.

Since the network slice identifier is configured to uniquely identify one network slice, the mapping rule includes the network slice identifier of the target slice network, so that the first communication node can uniquely identify the target network slice according to the network slice identifier serving as the mapping rule, map the target deterministic flow to the target network slice with a corresponding SLA guarantee, and transmit the packet of the target deterministic flow through the target network slice.

For example, in the present disclosure, distributed control plane technologies used for supporting slicing mainly include an FA, a VPN+, and a Slice+. The network slice identifier includes an AII configured to distinguish and identify different virtual network resources; an FA-ID configured to identify an FA path corresponding to a series of constraint conditions including calculation-type, metric-type and other constraint conditions; and a VTN-ID configured to identify a VTN; in addition, the network slice ID further includes a multi-topology ID configured to identify a sub-topology.

Accordingly, in some implementations, the network slice ID includes an AII, an FA-ID, a VTN-ID, and a multi-topology-ID. Any network slice ID described above may be used to uniquely identify one network slice.

In the present disclosure, slicing in a forwarding plane of a bearer network may include soft slicing and hard slicing. The soft slicing is based on statistic multiplexing in Layer 2 or above, for example, includes a tunnel/pseudo wire technology based on SR, IP/MPLS, and a virtual technology based on VPN, VLAN and the like. The hard slicing is based on a physical rigid pipe in Layer 1 or an optical layer, for example, includes a FlexE technology, a SC technology, an OTN technology, a WDM technology, and the like.

Accordingly, in some implementations, the target network slice includes a soft slice created by slicing based on a flexible pipe, a hard slice created by slicing based on a physical rigid pipe; the slicing based on the flexible pipe includes a tunnel/pseudo wire technology based on SR and IP/MPLS, a virtual technology based on VPN and VLAN; and the slicing based on the physical rigid pipe includes a FlexE technology, a SC technology, an OTN technology, and a WDM technology.

As described above, in the present disclosure, a manner configuring a control plane is adopted for notification and interaction of information related to a mapping from a deterministic flow to a network slice. In some implementations, notification and interaction of information related to a mapping from a deterministic flow to a network slice between the second communication node and the first communication node are implemented through a border gateway protocol (BGP) message.

Accordingly, in some implementations, the configuration message includes a BGP message.

In some implementations, notification and interaction of information related to a mapping from a deterministic flow to a network slice between the second communication node and the first communication node are implemented through an update message (i.e., UPDATE message) in the BGP message. The update message is configured to transmit routing information between BGP peers, and information carried in the update message may be used to create topologies describing relationships between various autonomous systems, so as to notify feasible routes with attributes of shared common paths to peers, or to withdraw infeasible routes from a service. NLRI is carried in the update message, and is configured to indicate information of a route target. In a function of a BGP Flowspec, NLRI and an extended community attribute may carry matching conditions of flows and operations to be executed after the flows are matched, and are configured to distribute rules for filtering and forwarding the flows.

A flow specification in the NLRI is an n-tuple including a plurality of matching conditions applied to an IP flow. Each Flowspec NLRI may include a plurality of components, such as target prefixes, source prefixes, protocols, ports, or the like. In a case where a designated packet matches an intersection (AND) of all components in the Flowspec, the packet is regarded to be matched with the Flowspec.

In the present disclosure, a slice-action component is defined based on the BGP Flowspec, and the slice-action component carries a mapping rule from a deterministic flows to a network slice.

Accordingly, in some implementations, the configuration message is an update message in the BGP message, the update message carries NLRI, the NLRI includes a slice-action component, and referring to Fig. 5, the operation S210 includes an operation S211.

At operation S211, configuring the mapping rule in the slice-action component, and generating the configuration message.

Fig. 2 is a schematic diagram of a format of a slice-action component based on the BGP Flowspec according to the present disclosure.

As shown in Fig. 2, the slice-action component according to the present disclosure includes a slice type field (Type) configured with a type of the target network slice; and a slice identifier field (Slice-ID) configured with a network slice identifier of the target network slice.

In the present disclosure, distributed control plane technologies used for supporting slicing include an FA, a VPN+, and a Slice+. Correspondingly, an AII, an FA-ID, a VTN-ID, and a Multi-Topology ID each may uniquely identify one network slice.

In some implementations, as shown in Fig. 2, the slice-action component based on the BGP Flowspec according to the present disclosure further includes a reserved (Resv) field.

In some implementations, as shown in Fig. 2, a length of the Type field is eight bits. A length of the Slice-ID field is variable, for example, if the network slice identifier is a Multi-Topology ID, the length of the Slice-ID field is sixteen bits; if the network slice identifier is an FA-ID, the length of the Slice-ID field is eight bits; if the network slice identifier is an AII, the length of the Slice-ID field is thirty-two bits; if the network slice identifier is a VTN-ID, the length of the Slice-ID field is thirty-two bits.

In some implementations, notification and interaction of information related to a mapping from a deterministic flow to a network slice between the second communication node and the first communication node are implemented through a PCEP message.

Accordingly, in some implementations, the configuration message includes a PCEP message.

In some implementations, the packet of the target deterministic flow includes a TSN packet, a DetNet packet.

In the present disclosure, the second communication node creates a hard slice based on a FlexE, a SC, or an optical channel data unit (ODUk) pipe, or the like, or creates a soft slice on a basis of a tunnel/pseudo wire technology based on SR, IP/MPLS, a virtualization technology based on VPN, VLAN, or the like.

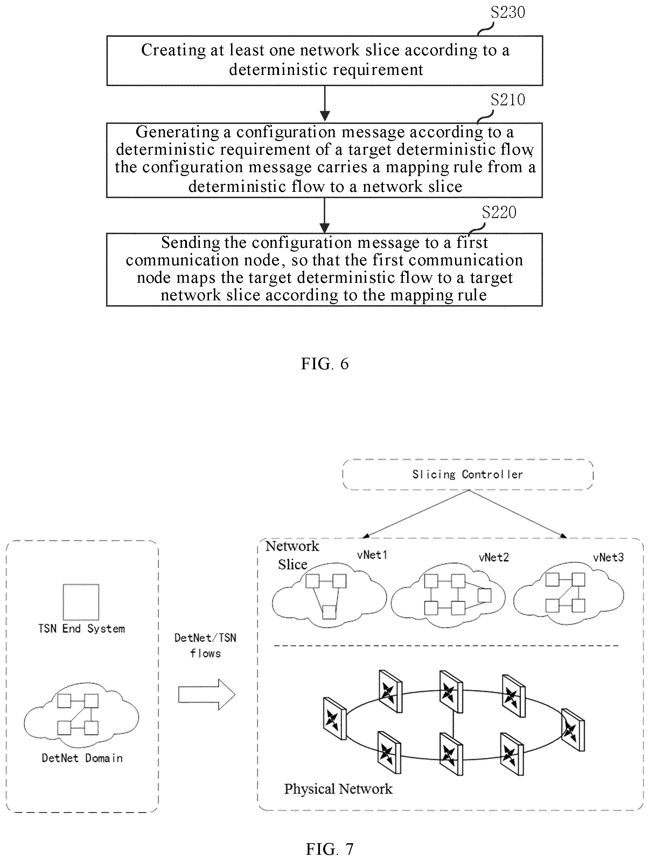

Accordingly, in some implementations, referring to Fig. 6, before the operation S210, the information notification method further includes an operation S230.

At operation S230, creating at least one network slice according to a deterministic requirement.

### First Example

In a first example, a network slice is configured to reserve and allocate resources for deterministic services, and meanwhile, a control plane BGP/PCEP Flowspec method is adopted to filter deterministic flows, such as a TSN flow in L2 layer, a DetNet flow in L3 layer, or the like, the deterministic flows are mapped to slices with deterministic services, and notification and interaction of information related to mappings from the deterministic flows to the slices are implemented as follows: a second communication node sends a configuration message to an ingress edge node and an exit edge node of a slice respectively, the configuration message carries a filtering rule and a mapping operation for the deterministic flow, the configuration message includes a BGP message or a PCEP message; and a first communication node receives and filters packets of a TSN flow or DetNet flow according to the configuration message, and maps the packets of the TSN flow or DetNet flow to a network slice with a corresponding SLA guarantee to be transmitted.

### Second Example

A network structure of TSN or DetNet based on a network slice is shown in Fig. 7, in a second example, a TSN terminal node in L2 layer or DetNet in L3 layer transmits a deterministic service through a network slice. In Fig. 7, a first communication node is an ingress edge node of the network slice, a second communication node is a slicing controller, a physical network creates a plurality of network slices, such as vNet1, vNet2, vNet3 and the like, a TSN flow or a DetNet flow is to be mapped to the network slice with a corresponding SLA guarantee. In the second example, the network slice is configured to reserve and allocate resources for deterministic services, and meanwhile, a control plane BGP/PCEP Flowspec method is adopted to filter deterministic flows, such as a TSN flow in L2 layer, a DetNet flow in L3 layer, or the like, the deterministic flows are mapped to slices with deterministic services, and notification and interaction of information related to mappings from the deterministic flows to the slices are implemented.

In the second example, slices such as vNet1, vNet2, vNet3, and the like are hard slices.

The slicing controller sends and creates a hard slice vNet1 based on FlexE, SC, ODUk pipe or the like, and the slice vNet1 may provide a SLA guarantee meeting a deterministic flow.

The slicing controller sends a configuration message of the deterministic flow to the ingress edge node of the network slice, the configuration message carries a filtering rule and a mapping operation for the deterministic flows, and the configuration message includes a BGP message or a PCEP message.

The ingress edge node of the network slice receives and filters packets of a TSN flows or a DetNet flow according to the configuration message, maps the packets of the TSN flow or DetNet flow to the hard slice vNet1 with a corresponding SLA guarantee to be transmitted.

### Third Example

A network structure of TSN or DetNet based on a network slice is shown in Fig. 7, in a third example, a TSN terminal node in L2 layer or DetNet in L3 layer transmits a deterministic service through a network slice. In Fig. 7, a first communication node is an ingress edge node of the network slice, a second communication node is a slicing controller, a physical network creates a plurality of network slices, such as vNet1, vNet2, vNet3 and the like, a TSN flow or a DetNet flow is mapped to the network slice with a corresponding SLA guarantee. In the third example, the network slice is configured to reserve and allocate resources for deterministic services, and meanwhile, a control plane BGP/PCEP Flowspec method is adopted to filter deterministic flows, such as a TSN flow in L2 layer, a DetNet flow in L3 layer, or the like, the deterministic flows are mapped to slices with deterministic services, and notification and interaction of information related to mappings from the deterministic flows to the slices are implemented.

In the third example, slices such as vNet1, vNet2, vNet3, and the like are soft slices.

The slicing controller sends and creates a soft slice vNet2 on a basis of a tunnel/pseudo wire technology based on SR, IP/MPLS, a virtualization technology based on VPN, VLAN, and the slice vNet2 may provide a SLA guarantee meeting a deterministic flow.

The slicing controller sends a configuration message of the deterministic flow to the ingress edge node of the network slice, the configuration message carries a filtering rule and a mapping operation for the deterministic flows, and the configuration message includes a BGP message or a PCEP message.

The ingress edge node of the network slice receives and filters packets of a TSN flow or DetNet flow according to the configuration message, maps the packets of the TSN flow or DetNet flow to the soft slice vNet2 with a corresponding SLA guarantee to be transmitted.

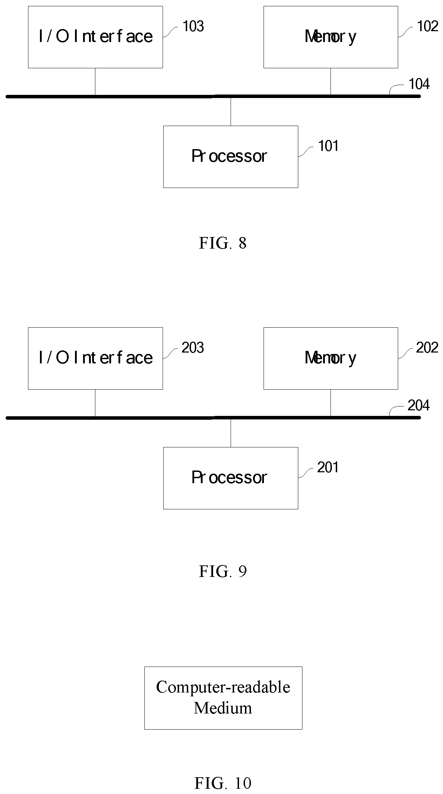

In a third aspect, referring to Fig. 8, the present disclosure provides a first communication node, including: at least one processor 101; a memory 102 configured to store at least one program, the at least one program, when executed by the at least one processor 101, causes the at least one processor 101 to perform the information notification method described in the first aspect; and at least one I/O interface 103, connected between the processor 101 and the memory 102, and configured to implement information interaction between the processor 101 and the memory 102.

In the present disclosure, the processor 101 is a device having a capability of processing data, and includes, but is not limited to, a Central Processing Unit (CPU), and the like; the memory 102 is a device having a capability of storing data, and includes, but is not limited to, a random access memory (RAM, in particular, SDRAM, DDR, and the like), a read only memory (ROM), an electrically erasable programmable read only memory (EEPROM), and a FLASH; and the I/O interface 103 is connected between the processor 101 and the memory 102, is configured to implement information interaction between the processor 101 and the memory 102, and includes, but is not limited to, a bus and the like.

In some implementations, the processor 101, the memory 102 and the I/O interface 103 are connected together through a bus 104, and are further connected to other components of a computing device.

In some implementations, the first communication node is an ingress edge node of a network slice.

In some implementations, the first communication node is a routing device.

The information notification method has been described in detail above, and thus is not repeated here.

In a fourth aspect, referring to Fig. 9, the present disclosure provides a second communication node, including: at least one processor 201; a memory 202 configured to store at least one program, the at least one program, when executed by the at least one processor 201, causes the at least one processor 201 to perform the information notification method described in the second aspect; and at least one I/O interface 203, connected between the processor 201 and the memory 202, and configured to implement information interaction between the processor 201 and the memory 202.

In the present disclosure, the processor 201 is a device having a capability of processing data, and includes, but is not limited to, a Central Processing Unit (CPU), and the like; the memory 102 is a device having a capability of storing data, and includes, but is not limited to, a random access memory (RAM, in particular, SDRAM, DDR, and the like), a read only memory (ROM), an electrically erasable programmable read only memory (EEPROM), and a FLASH; and the I/O interface 103 is connected between the processor 201 and the memory 202, is configured to implement information interaction between the processor 201 and the memory 102, and includes, but is not limited to, a bus and the like.

In some implementations, the processor 201, the memory 202 and the I/O interface 203 are connected together through a bus 204, and are further connected to other components of a computing device.

In some implementations, the second communication node is a slicing controller.

The information notification method has been described in detail above, and thus is not repeated here.

In a fifth aspect, the present disclosure provides a computer-readable medium having a computer program stored therein, the computer program, when executed by a processor, performs the information notification method in the first aspect or the information notification method in the second aspect.

The information notification method in the first aspect or the information notification method in the second aspect has been described in detail above, and thus is not repeated here.

It should be understood by those of ordinary skill in the art that all or some of operations in the method, functional modules/components in the apparatus disclosed above may be implemented as software, firmware, hardware, or suitable combinations thereof. In a hardware implementation, the division between the functional modules/ components stated above does not correspond to the division of physical components; for example, one physical component may have a plurality of functions, or one function or operation may be performed through cooperation of several physical components. Some or all of the physical components may be implemented as software to be executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store desired information and can be accessed by a computer. The communication medium generally includes computer-readable instructions, data structures, program modules or other data in a modulated data signal, such as a carrier wave or other transmission mechanism, and may include any information delivery medium.

The present disclosure discloses the exemplary embodiments, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. An information notification method, applied to a first communication node, comprising:
receiving a configuration message of a deterministic flow sent by a second communication node, with the configuration message carrying a mapping rule from the deterministic flow to a network slice; and
mapping a target deterministic flow to a target network slice according to the mapping rule, and transmitting a packet of the target deterministic flow through the target network slice.

2. The information notification method of claim 1, wherein the first communication node is an ingress edge node of a network slice.

3. The information notification method of claim 1, wherein the mapping rule comprises a network slice identifier of the target network slice, and the network slice identifier is configured to uniquely identify the target network slice.

4. The information notification method of claim 3, wherein the network slice identifier of the target network slice comprises an administrative instance identifier, a flexible algorithm identifier, a virtual transport network identifier and a multi-topology identifier.

5. The information notification method of any one of claims 1 to 4, wherein the target network slice comprises a soft slice created by slicing based on a flexible pipe, and a hard slice created by slicing based on a physical rigid pipe;
the slicing based on the flexible pipe comprises a tunnel/pseudo wire technology based on segment routing, internet protocol/multi-protocol label switching, and a virtualization technology based on a virtual private network and a virtual local area network; and
the slicing based on the physical rigid pipe comprises a flexible Ethernet technology, a slicing channel technology, an optical transport network technology and a wavelength division multiplexing technology.

6. The information notification method of claim 1, wherein the configuration message comprises a border gateway protocol message.

7. The information notification method of claim 6, wherein the configuration message is an update message in the border gateway protocol message, and the update message carries network layer reachability information comprising a slice-action component configured with the mapping rule.

8. The information notification method of claim 7, wherein the mapping rule configured in the slice-action component comprises:
a slice type field configured with a type of the target network slice; and
a slice identifier field configured with a network slice identifier of the target network slice.

9. The information notification method of claim 8, wherein the mapping a target deterministic flow to a target network slice according to the mapping rule, and transmitting a packet of the target deterministic flow through the target network slice comprises:
mapping the target deterministic flow to the target network slice according to the type of the target network slice configured in the slice type field and the network slice identifier of the target network slice configured in the slice identifier field, and transmitting the packet of the target deterministic flow through the target network slice.

10. The information notification method of claim 8, wherein the configuration message comprises a path computation element protocol message.

11. The information notification method of any one of claims 1 to 4, and claims 6 to 10, wherein the packet of the target deterministic flow comprises a packet of time-sensitive networking and a packet of a deterministic network.

12. An information notification method, applied to a second communication node, comprising:
generating a configuration message according to a deterministic requirement of a target deterministic flow, with the configuration message carrying a mapping rule from a deterministic flow to a network slice; and
sending the configuration message to a first communication node, so that the first communication node maps the target deterministic flow to a target network slice according to the mapping rule.

13. The information notification method of claim 12, wherein the second communication node is a slicing controller.

14. The information notification method of claim 12, wherein the mapping rule comprises a network slice identifier of the target network slice, and the network slice identifier is configured to uniquely identify the target network slice.

15. The information notification method of claim 14, wherein the network slice identifier of the target network slice comprises an administrative instance identifier, a flexible algorithm identifier, a virtual transport network identifier and a multi-topology identifier.

16. The information notification method of any one of claims 12 to 15, wherein the target network slice comprises a soft slice created by slicing based on a flexible pipe, and a hard slice created by slicing based on a physical rigid pipe;
the slicing based on the flexible pipe comprises a tunnel/pseudo wire technology based on segment routing, internet protocol/multi-protocol label switching, and a virtualization technology based on a virtual private network and a virtual local area network; and
the slicing based on the physical rigid pipe comprises a flexible Ethernet technology, a slicing channel technology, an optical transport network technology and a wavelength division multiplexing technology.

17. The information notification method of claim 12, wherein the configuration message comprises a border gateway protocol message.

18. The information notification method of claim 17, wherein the configuration message is an update message in the border gateway protocol message, the update message carries network layer reachability information comprising a slice-action component configured with the mapping rule;
the generating a configuration message according to a deterministic requirement of a target deterministic flow comprises:
configuring the mapping rule in the slice-action component, and generating the configuration message.

19. The information notification method of claim 18, wherein the mapping rule configured in the slice-action component comprises:
a slice type field configured with a type of the target network slice; and
a slice identifier field configured with a network slice identifier of the target network slice.

20. The information notification method of claim 19, wherein a length of the slice identifier field is variable.

21. The information notification method of claim 12, wherein the configuration message comprises a path computation element protocol message.

22. The information notification method of any one of claims 12 to 15, and claims 17 to 21, wherein the packet of the target deterministic flow comprises a packet of time-sensitive networking and a packet of a deterministic network.

23. The information notification method of any one of claims 12 to 15, and claims 17 to 21, further comprising:
before the generating a configuration message according to a deterministic requirement of a target deterministic flow, creating at least one network slice according to the deterministic requirement.

24. A first communication node, comprising:
at least one processor;
a memory having at least one program stored thereon, the at least one program, when executed by the at least one processor, causes the at least one processor to perform the information notification method of any one of claims 1 to 11; and
at least one I/O interface, connected between the processor and the memory, and configured to implement information interaction between the processor and the memory.

25. The first communication node of claim 24, wherein the first communication node is an ingress edge node of a network slice.

26. A second communication node, comprising:
at least one processor;
a memory having at least one program stored thereon, the at least one program, when executed by the at least one processor, causes the at least one processor to perform the information notification method of any one of claims 12 to 23; and
at least one I/O interface, connected between the processor and the memory, and configured to implement information interaction between the processor and the memory.

27. The second communication node of claim 26, wherein the second communication node is a slicing controller.

28. A computer-readable medium having a computer program stored therein, the computer program, when executed by a processor, performs the information notification method of any one of claims 1 to 11, or the information notification method of any one of claims 12 to 23.
